# EUROPEAN PATENT APPLICATION

(11) **EP 2 573 728 A1**
(43) Date of publication of application: **27.03.2013**
(21) Application number: 10851835.8
(22) Date of filing: 11.11.2010
(51) Int. Cl.: G06Q 50/00, G11B 20/10

(54) **SOUND-SOURCE DISTRIBUTION METHOD FOR AN ELECTRONIC TERMINAL, AND SYSTEM FOR SAME**

(30) Priority: 20.05.2010 KR 20100047347
(71) Applicant: Fluxus Inc., Seoul 135-812 (KR)
(72) Inventor: KIM, Byungchan, Seoul 135-812 (KR)
(74) Representative: Sevinç, Erkan
(86) International application number: PCT/KR2010/007972
(87) International publication number: WO 2011/145789

(57) **Abstract**

There is provided a method of reproducing and distributing a sound source of en electronic terminal. The method includes a step of starting to simultaneously reproduce a stream of an MR (Music Recorded) sound source file and a stream of an AR (All Recorded) sound source file that a voice is recorded to be added to the MR sound source file by a reproducing unit of the electronic terminal, and outputting one stream of the streams through an output unit; and a step of controlling the reproducing unit to stop the output of the one stream that is currently being output through the output unit and to output the other stream through the output unit by a reproducing switch unit of the electronic terminal based on a selection of a user while the stream of the MR sound source file and the stream of the AR sound source file are reproduced, respectively.

## Description

### [Technical Field]

The present invention relates to a method and a system for reproducing and distributing a sound source of an electronic terminal, and more particularly, a method and a system capable of reproducing an MR (Music Recorded) sound source or an AR (All Recorded) sound source in an electronic terminal and distributing the MR sound source or the AR sound source via a network so as to be shared with and enjoyed by other users.

### [Background Art]

The present invention relates to a method and a system for reproducing and distributing a sound source of an electronic terminal.

The electronic terminal includes all kinds of electronic devices such as mobile communication terminals which can perform mobile communications, PDAs (personal digital assistants), notebook computers, and PCs (personal computers), which are connected to a network to be able to transmit and receive data. Along with the advancement of hardware technologies of the electronic devices, electronic terminals have been developed to have increasingly a smaller size and a higher processing speed. With the development of software technologies to operate such hardware, there have been proposed various electronic terminals capable of transmitting and receiving text data and multimedia data, such as music and images, and processing data. Especially, in the forms of entertainments, everyone has enjoyed music and videos as digital contents anywhere through a small sized-portable electronic device.

### [Disclosure]

### [Technical Problem]

An object of the present invention is to provide a method and a system for reproducing and distributing a sound source of an electronic terminal capable of selectively reproducing an MR (Music Recorded) sound source and an AR (All Recorded) sound source while minimizing overhead of a system.

Another object of the present invention is to provide a method and a system for reproducing and distributing a sound source of an electronic terminal capable of simultaneously recording a voice of a user while listening to an MR sound source. Still another object of the present invention is to provide a method and a system for reproducing and distributing a sound source of an electronic terminal that do not reproduce an AR sound source when recording a voice of a user with an MR sound source.

Further, still another object of the present invention is to provide a method and a system for reproducing and distributing a sound source of an electronic terminal that generate a recorded file when a voice of a user that is being recorded with an MR sound source is equal to or greater than a predetermined level.

Furthermore, still another object of the present invention is to provide a method and a system for reproducing and distributing a sound source of an electronic terminal capable of distributing a voice of a user that is recorded with an MR sound source to other users.

Moreover, still another object of the present invention is to provide a method and a system for reproducing and distributing a sound source of an electronic terminal capable of posting a voice of a user that is recorded with an MR sound source to a third party server to be distributed to other users.

In addition, still another object of the present invention is to provide a method and a system for reproducing and distributing a sound source of an electronic terminal capable of transferring a voice of a user that is recorded with an MR sound source by e-mail to be distributed to other users.

Further, still another object of the present invention is to provide a method and a system for reproducing and distributing a sound source of an electronic terminal capable of transferring a voice of a user that is recorded with an MR sound source by a messenger message to be distributed to other users.

### [Technical Solution]

In order to achieve the above object, an exemplary embodiment of the present invention provides a method for reproducing and distributing a sound source of an electronic terminal. The method includes (a) a step of starting to simultaneously reproduce a stream of an MR (Music Recorded) sound source file and a stream of an AR (All Recorded) sound source file that a voice is recorded to be added to the MR sound source file by a reproducing unit of the electronic terminal, and outputting one stream of the streams through an output unit; and (b) a step of controlling the reproducing unit to stop the output of the one stream that is currently being output through the output unit and to output the other stream through the output unit by a reproducing switch unit of the electronic terminal based on a selection of a user while the stream of the MR sound source file and the stream of the AR sound source file are reproduced, respectively.

The method may include (c) a step of recording a voice of the user received through the microphone and storing the recorded voice as a recorded file by a recording unit of the electronic terminal.

The step (c) may include a step of recording the voice of the user received through the microphone and storing the recorded voice as the recorded file by the recording unit of the electronic terminal when the stream of the MR sound source file is output through the output unit, while the voice of the user is not recorded when the stream of the AR sound source file is output through the output unit.

The step (b) may include a step of controlling the reproducing unit to output the stream of the MR sound source file through the output unit by the reproducing switch unit when the voice of the user received through the microphone is recorded by the recording unit of the electronic terminal.

The step (c) may include a step of recording the voice of the user received through the microphone and storing the recorded voice as the recorded file by the recording unit of the electronic terminal when a level of the voice of the user is equal to or greater than a predetermined level value.

The step (c) may include (c-1) a step of recording the voice of the user received through the microphone by the recording unit of the electronic terminal, (c-2) a step of determining by the recording unit of the electronic terminal whether or not the recorded voice is an effective voice by comparing an average value and a variance value of the recorded voice with respect to a recording time with a predetermined level value, respectively, and (c-3) a step of storing the recorded voice as the recorded file by the recording unit of the electronic terminal, when it is determined that the recorded voice is the effective voice.

The step (c) may further include (c-4) a step of compressing and storing the recorded file by the recording unit of the electronic terminal.

The method may further include (d) a step of transferring the recorded file to a streaming server by a distributing unit of the electronic terminal.

The method may further include (e) a step of storing the recorded file received from the distributing unit of the electronic terminal by the streaming server, and (f) a step of transferring a stream of voice data of the recorded file from the streaming server to a user terminal that accesses thereto using a streaming URL of the recorded file.

The step (d) may include a step of transferring the recorded file and the MR sound source file reproduced from the distributing unit of the electronic terminal to the streaming server when the recorded file is generated, the step (e) may include a step of storing the recorded file and the MR sound source file received by the streaming server from the distributing unit of the electronic terminal, and the step (f) may include a step of transferring the stream of the voice data of the recorded file and a stream of audio data of the MR sound source file from the streaming server to the user terminal that accesses thereto using the streaming URL of the recorded file.

The step (d) may include a step of transferring the recorded file and an identifier of the MR sound source file reproduced when the recorded file is generated to the streaming server from the distributing unit of the electronic terminal, the step (e) may include a step of storing the recorded file and the identifier of the MR sound source received by the streaming server from the distributing unit of the electronic terminal, and the step (f) may include a step of extracting the voice data of the recorded file and the MR sound source file corresponding to the identifier of the MR sound source file from an MR sound source database and transferring a stream of audio data of the extracted recorded file from the streaming server to the user terminal that accesses thereto using the streaming URL of the recorded file.

The step (d) may further include (d-1) a step of receiving the streaming URL of the recorded file by the distributing unit of the electronic terminal from the streaming server, and (d-2) a step of transferring content including the streaming URL to a third party server from the distributing unit of the electronic terminal to be posted.

The step (d) may further include (d-1) a step of receiving the streaming URL of the recorded file by the distributing unit of the electronic terminal from the streaming server, and (d-3) a step of transferring content including the streaming URL and an e-mail address of an e-mail receiver to an e-mail server from the distributing unit of the electronic terminal to be transferred by e-mail.

The step (d) may further include (d-1) a step of receiving the streaming URL of the recorded file by the distributing unit of the electronic terminal from the streaming server, and (d-4) a step of transferring content including the streaming URL and an identifier of a message receiver to a messenger server from the distributing unit of the electronic terminal to be transferred by a messenger.

The step (d) may include a step of transferring the recorded file and third party server information from the distributing unit of the electronic terminal to the streaming server, and the step (e) may further include (e-1) a step of transferring content including the streaming URL to a third party server corresponding to the third party server information received by the streaming server from the distributing unit of the electronic terminal to be posted.

The step (d) may include a step of transferring the recorded file and the e-mail address of the e-mail receiver to the streaming server from the distributing unit of the electronic terminal, and the step (e) may further include (e-2) a step of transferring the content including the streaming URL and an e-mail address of an e-mail receiver received by the streaming server from the distributing unit of the electronic terminal to an e-mail server to be transferred by e-mail.

The step (c) may include a step of controlling the reproducing unit to stop the output of the stream of the AR sound source file or the output of the stream of the MR sound source file when it is determined by the recording unit of the electronic terminal that an effective voice equal to or greater than a predetermined level value is not input for a preset period of time.

The step (c) may include (c-1) a step of recording the voice of the user by the recording unit of the electronic terminal, (c-5) a step of determining by the recording unit of the electronic terminal whether or not the voice that is being recorded is an effective voice by respectively comparing a predetermined level value with an average value and a variance value of the voice that is being recorded with respect to a preset recording time right before comparing, and (c-6) a step of controlling the reproducing unit to stop the output of the stream of the AR sound source file or the output of the stream of the MR sound source file when it is determined by the recording unit of the electronic terminal that the voice that is being recorded is not the effective voice.

In order to achieve the above object, an exemplary embodiment of the present invention provides a system for reproducing and distributing a sound source of an electronic terminal. The system includes an input unit that receives input from a user; an output unit that outputs the sound source; a reproducing unit that starts to simultaneously reproduce a stream of an MR (Music Recorded) sound source file and a stream of an AR (All recorded) sound source file that is recorded to be added to the MR sound source file, and outputs one stream of the streams; and a reproducing switch unit that controls the reproducing unit to stop the output of the one stream that is currently being output and to output the other stream through the output unit based on a selection of the user while the stream of the MR sound source file and the stream of the AR sound source file are simultaneously reproduced.

The system may further include a microphone that receives a voice of the user; and a recording unit that records the voice of the user received through the microphone and stores the recorded voice as a recorded file while the stream of the MR sound source file is output through the output unit.

The reproducing switch unit may control the reproducing unit to output the stream of the MR sound source file through the output unit when the recording unit records the voice of the user received through the microphone.

The recording unit may record the voice of the user and store the recorded voice as the recorded file when a level of the voice of the user received through the microphone is equal to or greater than a predetermined level value.

The recording unit may record the voice of the user received through the microphone, determine whether or not the recorded voice is an effective voice by comparing an average value and a variance value of the recorded voice with respect to a recording time with a predetermined level value, respectively, and store the recorded voice as the recorded file when it is determined that the recorded voice is the effective voice.

The recording unit may compress and store the recorded file.

The system may further include a distributing unit that transfers the recorded file to a streaming server.

The distributing unit may transfer the recorded file and the MR sound source file reproduced when the recorded file is generated or an identifier of the MR sound source file to the streaming server.

The distributing unit may transfer the recorded file to the streaming server, receives a streaming URL of the recorded file from the streaming server, and transfer content including the streaming URL to a third party server to be posted.

The distributing unit may transfer the recorded file to the streaming server, receive a streaming URL of the recorded file from the streaming server, and transfer content including the streaming URL and an e-mail address of an e-mail receiver input by the user through the input unit to an e-mail server to be transferred by e-mail.

The distributing unit may transfer the recorded file to the streaming server, receive a streaming URL of the recorded file from the streaming server, and transfer content including the streaming URL and an identifier of a message receiver input by the user through the input unit to a messenger server to be transferred by a messenger.

The recording unit may control the reproducing unit to stop the output of the stream of the AR sound source file or the output of the stream of the MR sound source file when an effective voice that is equal to or greater than a predetermined level value is not received through the microphone for a preset period of time.

The recording unit may record the voice of the user received through the microphone, determine whether or not the voice that is being recorded is an effective voice by respectively comparing a predetermined level value with an average value and a variance value of the voice that being recorded with respect to a recording time for a preset period of time right before comparing, and store the recorded voice as the recorded file when it is determined that the voice being recorded is the effective voice.

### [Effect of the Invention]

As described above, according to an exemplary embodiment of the present invention, there are provided a method and a system for reproducing and distributing a sound source of an electronic terminal capable of selectively reproducing an MR (Music Recorded) sound source and an AR (All Recorded) sound source while minimizing overhead of a system.

Further, according to an exemplary embodiment of the present invention, there are provided a method and a system for reproducing and distributing a sound source of an electronic terminal capable of simultaneously recording a voice of a user while listening to an MR sound source.

Furthermore, according to an exemplary embodiment of the present invention, there are provided a method and a system for reproducing and distributing a sound source of an electronic terminal that do not reproduce an AR sound source when recording a voice of a user with an MR sound source.

Moreover, according to an exemplary embodiment of the present invention, there are provided a method and a system for reproducing and distributing a sound source of an electronic terminal that generate a recorded file when a voice of a user that is being recorded with an MR sound source is equal to or greater than a predetermined level.

In addition, according to an exemplary embodiment of the present invention, there are provided a method and a system for reproducing and distributing a sound source of an electronic terminal capable of distributing a voice of a user that is recorded with an MR sound source to other users.

Further, according to an exemplary embodiment of the present invention, there are provided a method and a system for reproducing and distributing a sound source of an electronic terminal capable of posting a voice of a user that is recorded with an MR sound source to a third party server to be distributed to other users.

Furthermore, according to an exemplary embodiment of the present invention, there are provided a method and a system for reproducing and distributing a sound source of an electronic terminal capable of transferring a voice of a user that is recorded with an MR sound source by e-mail to be distributed to other users.

Moreover, according to an exemplary embodiment of the present invention, there are provided a method and a system for reproducing and distributing a sound source of an electronic terminal capable of transferring a voice of a user that is recorded with an MR sound source by a messenger message to be distributed to other users.

### [Description of Drawings]

FIG. 1 is a block diagram illustrating an electronic terminal according to a preferred embodiment of the present invention.

FIG. 2 is a diagram illustrating a system for reproducing and distributing a sound source of an electronic terminal according to a preferred embodiment of the present invention.

FIG. 3 is a flowchart illustrating a method for reproducing and distributing a sound source of an electronic terminal according to a preferred embodiment of the present invention.

FIG. 4 is a flowchart illustrating steps of distributing to a third party server in the method for reproducing and distributing the sound source of the electronic terminal according to a preferred embodiment of the present invention.

FIG. 5 is a diagram that illustrates a screen showing when a sound source of a recorded file of the present invention is distributed to a twitter service as the third party server.

FIG. 6 is a flowchart illustrating steps of distributing by e-mail in the method for reproducing and distributing the sound source of the electronic terminal according to the preferred embodiment of the present invention.

FIG. 7 is a diagram that illustrates a screen showing when the sound source of the recorded file of the present invention is distributed by the e-mail.

FIG. 8 is a flowchart illustrating steps of distributing by a messenger message in the method for reproducing and distributing the sound source of the electronic terminal according to the preferred embodiment of the present invention.

FIG. 9 is a diagram that illustrates a screen showing when the sound source of the recorded file of the present invention is distributed by the messenger message.

FIG. 10 is a diagram that illustrates a screen showing when the distributed sound source of the recorded file of the present invention is reproduced on a user terminal.

### [Description of Main Reference Numerals of Drawings]

| | | | |
|---|---|---|---|
| 100: | Electronic terminal | 101: | Microphone |
| 102: | Input unit | 103: | Output unit |
| 110: | Reproducing unit | 120: | Reproducing switch unit |
| 130: | Recording unit | 140: | Distributing unit |
| 200: | Network | 201: | User terminal |
| 210: | Streaming server | 220: | Third party server |
| 230: | E-mail server | 240: | Messenger server |

### [Best Mode]

The details of other embodiments are included in the detailed description and the drawings.

Merits and features of the present invention, and methods for accomplishing them will become more apparent from the following embodiments taken in conjunction with the accompanying drawings. However, the present invention is not limited to the disclosed embodiments, but may be implemented in various manners. The embodiments are provided to complete the disclosure of the present invention and to allow those having ordinary skill in the art to understand the scope of the present invention. The present invention is defined by the category of the claims. Through the present specification and drawings, parts having substantially same function and configuration will be assigned same reference numerals.

Hereinafter, a system for reproducing and distributing a sound source of an electronic terminal according to embodiments of the present invention will be described with reference to the drawings.

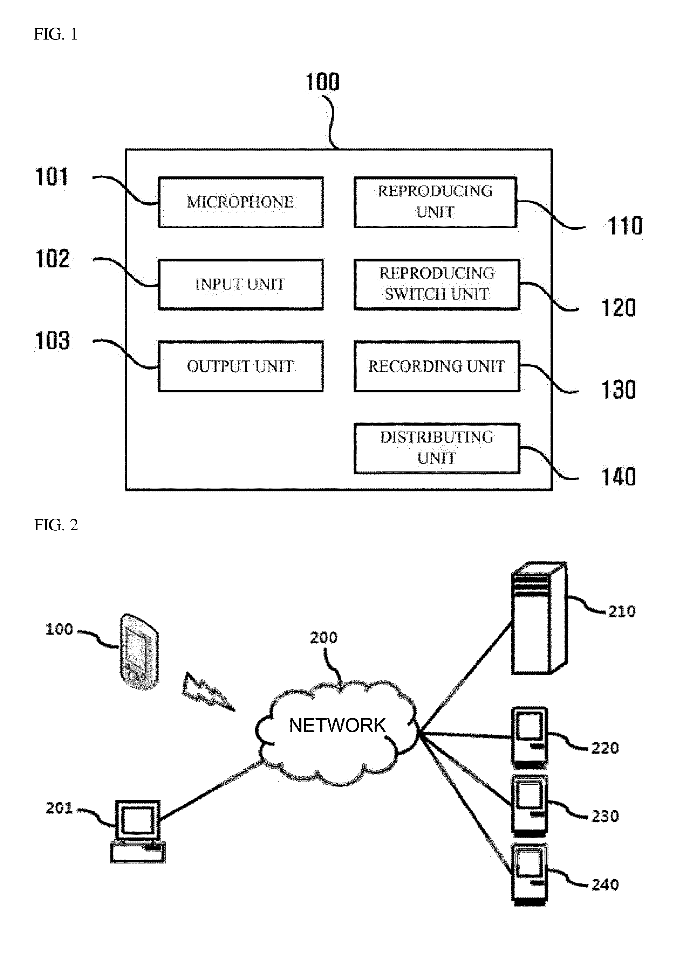

FIG. 1 is a block diagram illustrating an electronic terminal according to a preferred embodiment of the present invention.

An electronic terminal 100 according to an embodiment of the present invention includes a microphone 101 that receives a voice of a user, an input unit 102 that receives touch input or the like by the user, an output unit 103 such as a speaker that outputs voice data, a reproducing unit 110, a reproducing switch unit 120, a recording unit 130, and a distributing unit 140.

FIG. 2 is a diagram illustrating a system for reproducing and distributing a sound source of an electronic terminal according to a preferred embodiment of the present invention.

A system for reproducing and distributing a sound source of an electronic terminal according to an embodiment of the present invention includes a network 200 such as the internet that enables data communications, the electronic terminal 100 and a user terminal 201 that are connected to the network, a streaming server 210, a third party server 220, an e-mail server 230, and a messenger server 240 that are connected to the network.

The electronic terminal 100 and the user terminal 201 include all kinds of electronic devices such as PCs (personal computers), PDAs (personal digital assistants), notebook computers, mobile communication terminals, smartphones, and tablet PCs that have therein a processing unit such as a CPU (central processing unit), a memory, and a network adapter that enables data communication via the network.

The network 200 includes all sorts of communication networks such as the internet and mobile communication networks that enable data communications, and includes routers, gateways, IP IMSs (multimedia subsystems), and the like.

The streaming server 210, the third party server 220, the e-mail server 230, and the messenger server 240 each are implemented by a computer system that is connected to the network 200 to provide communication services. These servers physically include server systems such as load balancing servers, database servers, web servers, and file servers.

The streaming server 210 is a server that transfers data packets in real time to provide services that play voices, images, animations, and the like in real time on the internet.

The third party server 220 is a server system that is operated by a third party so as to be implemented to provide desired web services such as blog services including microblogging services, search services, community services, and electronic publishing services. The third party server 220 receives external data or provides an API (application programming interface) to external service to increase extensibility of services.

The e-mail server 230 is a system that provides e-mail services according to communication protocol.

The messenger server 240 is a server system that provides a function to perform data communications including text data between communication terminals.

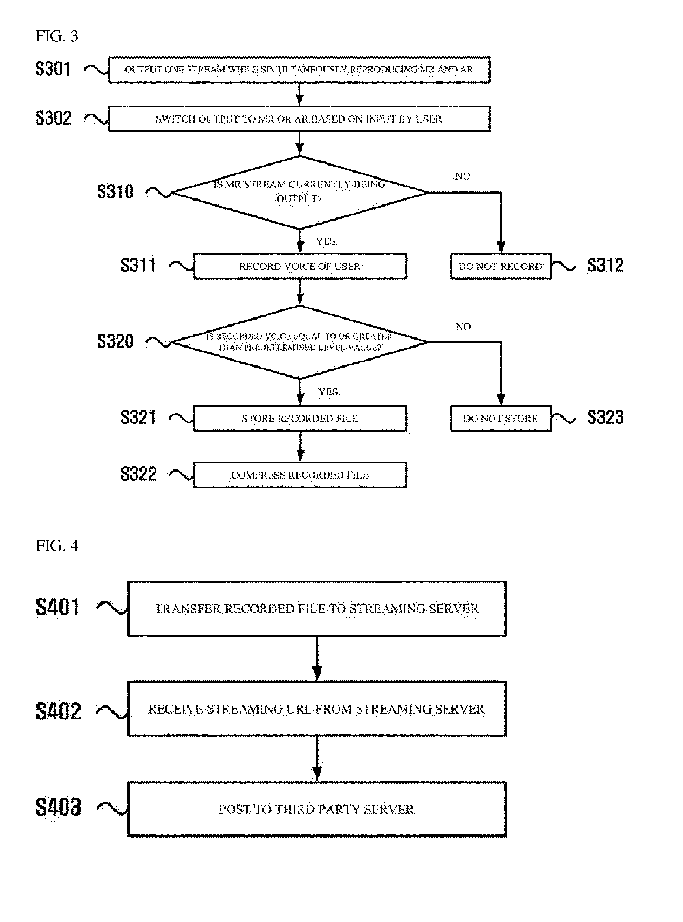

FIG. 3 is a flowchart illustrating a method for reproducing and distributing a sound source of an electronic terminal according to a preferred embodiment of the present invention.

In order to practice the present invention, MR (Music Recorded) sound source files and AR (All Recorded) sound source files are stored in the memory of the electronic terminal 100 as sound sources. The AR sound source file is a file including typical music data, and the MR sound source file is a music file for accompaniment that a voice of a singer has been removed from the AR sound source file. The MR sound source file is generated while maximizing its level in a mastering process, and the AR sound source file is generated while appropriately adjusting its level in a mastering process since the voice of the singer is recorded to be included therein.

When the user manipulates the input unit 102 to reproduce music, the reproducing unit 110 of the electronic terminal 100 simultaneously reproduces an MR sound source file of the selected music and an AR sound source file corresponding to the MR sound source file (S301). Here, any one of a stream for reproducing the MR sound source file and a stream for reproducing the AR sound source file is output through the output unit 103 so as to be listened to by the user. In this case, the stream of the MR sound source file or the stream of the AR sound source file may be selectively output by the manipulation of the user through the input unit 102 (S302). The MR sound source file and the AR sound source file are completely synchronized with each other for the same song, and the AR sound source file is merely different from the MR sound source file in that the AR sound source file is recorded so as to include the voice of the singer. Thus, when the user manipulates to output the corresponding MR sound source file while listening to the AR sound source file, the user can feel as if the music, from which the voice of the singer has been removed, is being output through the output unit 103 without discontinuity. It is assumed that one of the sound source files is reproduced and output while the AR sound source file and the MR sound source file are simultaneously reproduced without selectively being output, and then the user selects to reproduce and output the other sound source file. In this case, the one sound source file that is currently being reproduced is stopped, the other sound source file is loaded into the memory, and a reproducing section of the other sound source file is searched for to be consecutively reproduced and output. Such a context switching leads to an increase in load, and thus the music may be output with discontinuity in time depending on performance of the electornic terminal 100.

The recording unit 130 may record the voice of the user that is received through the microphone 101 while reproducing the sound sources. Here, if the voice of the user is recorded and stored as a file when the stream of the AR sound source file is output, the AR sound source is copied, resulted in infringing copyright of another person. Thus, the recording unit 130 determines whether or not the stream of the MR sound source file is currently being output (S310), when it is determined that the stream of the AR sound source file is being output, the recording unit does not record the voice of the user (S312). Meanwhile, when it is determined that the stream of the MR sound source file is being output, the recording unit records the voice of the user (S311). Here, only the voice of the user may be recorded, or the voice of the user may be recorded with the stream of the sound source file.

Even when it is determined that the stream of the MR sound source file is being output, when a level of the recorded voice is less than a predetermined level value, the recorded voice is not effective. Further, when the voice of the user is recorded with the stream of the sound source file, the recorded data impinges on the copyright of the MR sound source file. Thus, the recording unit 130 determines whether or not the recorded voice is an effective voice whose level is equal to or greater than a predetermined level (S320), when it is determined that the recorded voice is not the effective voice, the recorded data is not stored (S323). Meanwhile, when it is determined that the recorded voice is the effective voice, the recorded voice data is stored as a recorded file (S321). The recorded file may be compressed using an audio compression format such as MP3, WMA (Windows Media Audio), AAC (Advanced Audio Coding), Ogg Vorbis, ATRAC3, WMA Lossless, FLAC (Free Lossless Audio Codec), Monkey's Audio, Perfect Clarity Audio, or Apple Lossless to ensure efficiency in size of the file, and stored (S322).

The level of the recorded voice is generally quantified as a decibel (dB). In order to determine whether or not the recorded voice is the effective voice, an average value and a variance value of the voice level with respect to the entire recording time are calculated. Then, it may be determined whether or not the calculated average value and variance value each have an average value and a variance value within a predetermined level value. When it is determined that the calculated average value is highly greater or lower than the average value within the predetermined level value, the recorded voice is not effective. When it is determined that the calculated variance value is highly greater than the variance value within the predetermined level value, the average value is not reliable. Meanwhile, when it is determined that the calculated variance value is highly lower than the variance value within the predetermined level value, the recorded voice is not the effective voice as a song.

Further, as another embodiment of the present invention, when the voice that is being currently recorded is not the effective voice having the average and variance values within the predetermined level value for a preset period of time, the recording unit may control the reproducing unit to stop the sound source file that is being reproduced. Especially, the MR sound source file is high in scarcity and includes instrumental music data without including the voice of the singer. Such an MR sound source file is illegal copied or distributed, resulted in a serious infringement of the right of a copyright holder. Accordingly, when it is determined that the user does not normally sing the song for a preset period of time (for example, 10 seconds) in recording by the recording unit, the output of the sound source file is stopped to fundamentally prevent the sound source from being illegal copied. In some cases, although the recording unit does not record, when a voice received through the microphone or the like is analyzed and the received voice is not the effective voice having the average and variance values within the predetermined level value for the preset period of time, the reproduction of the sound source file may be stopped.

Hereinafter, there will be described various embodiments of transferring the recorded file to the streaming server via the network to be shared with or distributed to other users.

FIG. 4 is a flowchart showing steps of distributing to the third party server in the method for reproducing and distributing the sound source of the electronic terminal according to the preferred embodiment of the present invention.

The distributing unit 140 transfers the recorded file to the streaming server 210 (S401). The streaming server 210 stores the received recorded file, and determines a streaming URL (Uniform Resource Locator) accessible to a streaming service of the recorded file via the network. In some embodiments, the distributing unit 140 may transfer the recorded file and the MR sound source file that has been being reproduced and output when generating the recorded file to the streaming server, and the streaming server may store the recorded file and the MR sound source file. As another embodiment, when various sound source files are stored in an MR sound source database that is accessible by the streaming server 210, the distributing unit 140 may transfer the recorded file and an identifier of the MR sound source file that has been being reproduced and output when generating the recorded file to the streaming server 210, and the streaming server 210 may store the recorded file and the identifier of the MR sound source file. In this case, when the streaming server 210 provides a streaming service to the user terminal 201 that is connected using the streaming URL, the streaming server extracts the recorded file and the MR sound source file corresponding to the identifier of the MR sound source file from the MR sound source database, and provides the streaming service. The streaming URL is transferred to the distributing unit 140 of the electronic terminal 100 from the streaming server 210 (S402). The distributing unit 140 may transfer content including the streaming URL to the third party server 220 to be posted thereto (S403). As described above, the third party server 220 means a service server that is operated by a third party, and the posting can be generally performed using API that is provided by the third party server 220.

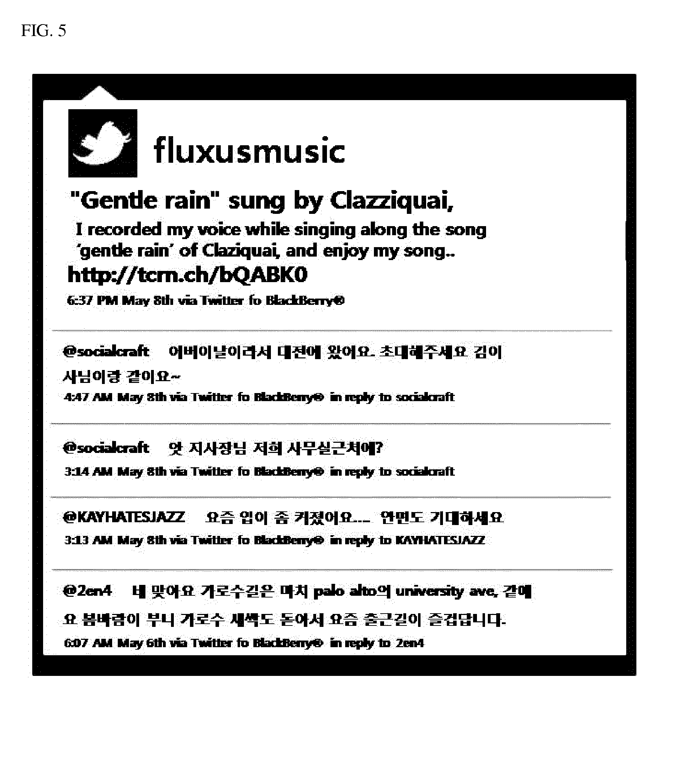

FIG. 5 is a diagram that illustrates a screen showing when the sound source of the recorded file of the present invention is distributed to a twitter service as the third party server. The third party server 220 includes various service servers, and an example of the third party server may include a twitter server that provides microblogging services. Further, the posting may include tweeting. As illustrated in FIG. 5, when a user having a twitter account "fluxusmusic" records his or her voice while singing along an MR sound source file of the song "gentle rain" sung by Clazziquai, the distributing unit 140 transfers the recorded file and the MR sound source file of the song "gentle rain" or an identifier of the MR sound source file to the streaming server 210. Thereafter, content "I recorded my voice while singing along the song 'gentle rain' of Claziquai, and enjoy my song.. http://tcrn.ch/bQABK0" including account information of "fluxusmusic" and the streaming URL may be transferred to be posted as a tweet using a twitter API. Here, as described above, the streaming URL is shortened through a URL shortening service.

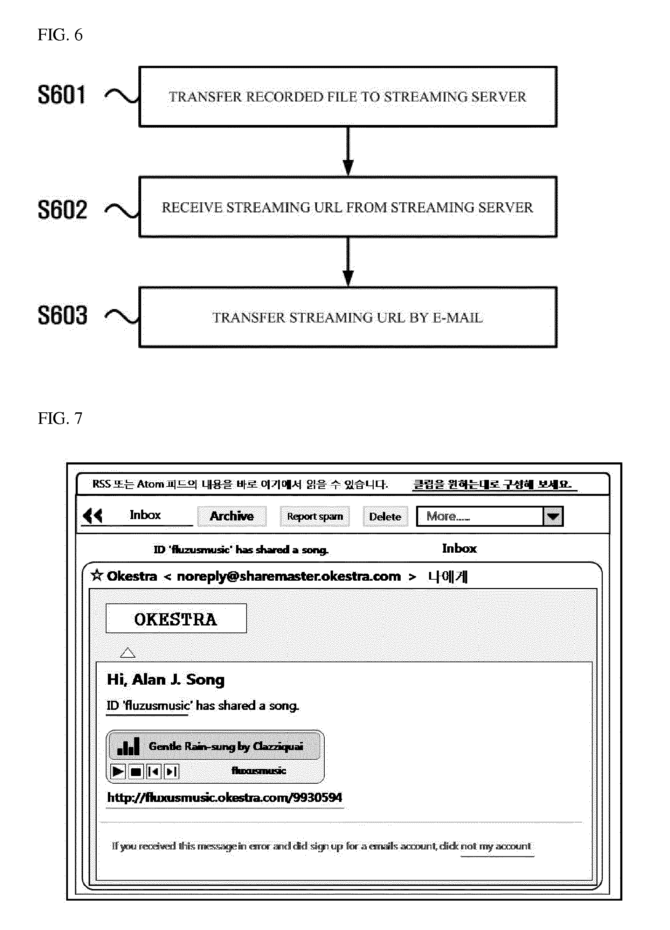

FIG. 6 is a flowchart showing steps of distributing by e-mail in the method for reproducing and distributing the sound source of the electronic terminal according to the preferred embodiment of the present invention.

The distributing unit 140 transfers the recorded file to the streaming server 210 (S601). The streaming server 210 stores the received recorded file, and determines a streaming URL accessible to a streaming service of the recorded file via the network. In some embodiments, the distributing unit 140 may transfer the recorded file and the MR sound source file that has been being reproduced and output when generating the recorded file to the streaming server, and the streaming server may store the recorded file and the MR sound source file. As another embodiment, when various sound source files are stored in the MR sound source database that is accessible by the streaming server 210, the distributing unit 140 may transfer the recorded file and the identifier of the MR sound source file that has been being reproduced and output when generating the recorded file to the streaming server 210, and the streaming server 210 may store the recorded file and the identifier of the MR sound source file. In this case, when the streaming server 210 provides a streaming service to the user terminal 201 that is connected using the streaming URL, the streaming server extracts the recorded file and the MR sound source file corresponding to the identifier of the MR sound source from the MR sound source database, and provides the streaming service. The streaming URL is transferred to the distributing unit 140 of the electronic terminal 100 from the streaming server 210 (S602). The distributing unit 140 transfers content including the streaming URL to the e-mail server 230 to be transferred by the e-mail (S603).

FIG. 7 is a diagram that illustrates a screen showing when the sound source of the recorded file of the present invention is distributed by the e-mail. Similarly to the example illustrated in FIG. 5, when a user having an ID "fluxusmusic" records his or her voice while singing along an MR sound source file of the song "gentle rain" sung by Clazziquai, and distributes the recorded file by the e-mail, e-mail including a message "ID 'fluxusmusic' has shared a song" and an embed player that directly accesses a streaming service to play the song or a streaming URL "http://fluxusmusic.okestra.com/9930594" may be transferred. Here, the distributing unit may directly receive an e-mail address of an e-mail receiver as an e-mail destination through the input unit.

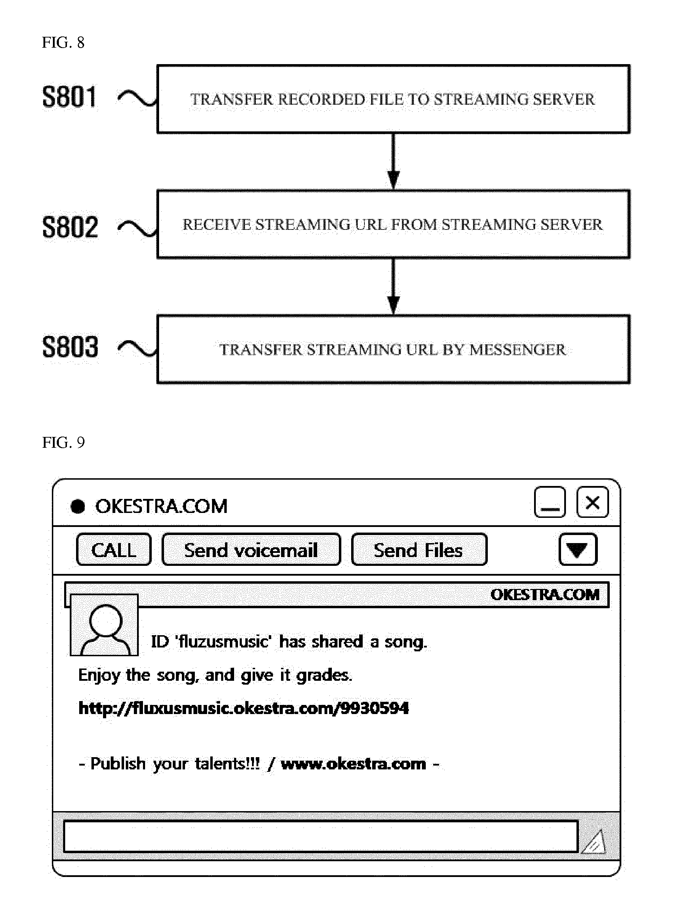

FIG. 8 is a flowchart illustrating steps of distributing by a messenger message in the method for reproducing and distributing the sound source of the electronic terminal according to the preferred embodiment of the present invention.

The distributing unit 140 transfers the recorded file to the streaming server 210 (S801). The streaming server 210 stores the received recorded file, and determines a streaming URL accessible to a streaming service of the recorded file via the network. In some embodiments, the distributing unit 140 may transfer the recorded file and the MR sound source file that has been being reproduced and output when generating the recorded file to the streaming server, and the streaming server may store the recorded file and the MR sound source file. As another embodiment, when various sound source files are stored in the MR sound source database that is accessible by the streaming server 210, the distributing unit 140 may transfer the recorded file and the identifier of the MR sound source file that is reproduced and output when generating the recorded file to the streaming server 210, and the streaming server 210 may store the recorded file and the identifier of the MR sound source file. In this case, when the streaming server 210 provides a streaming service to the user terminal 201 that is connected using the streaming URL, the streaming server extracts the recorded file and the MR sound source file corresponding to the identifier of the MR sound source from the MR sound source database, and provides the streaming service. The streaming URL is transferred to the distributing unit 140 of the electronic terminal 100 from the streaming server 210 (S802). The distributing unit 140 transfers content including the streaming URL to the messenger server 240 to be transferred to other messenger users (S803).

FIG. 9 is a diagram that illustrates a screen showing when the sound source of the recorded file of the present invention is distributed by the messenger message.

Similarly to the example illustrated in FIG. 5, when a user having an ID "fluxusmusic" records his or her voice while singing along an MR sound source file of the song "gentle rain" sung by Clazziquai, and distributes the recorded file by a messenger message, the messenger message including a message "ID 'fluxusmusic' has shared a song. Enjoy the song, and give it grades" and an embed player that directly accesses the streaming service to play the song or a streaming URL "http://fluxusmusic.okestra.com/9930594" may be transferred. Here, the distributing unit may directly receive messenger account information and an identifier of a messenger receiver as a messenger message destination through the input unit.

Further, as described above, the step of posting to the third party server 220, or requesting to transfer the e-mail to the e-mail server 230 may be performed by the streaming server 210 not the distributing unit 140. In this case, the distributing unit 140 may transfer the recorded file and information on the third party server to the streaming server, and the streaming server 210 may perform the posting of the content including the streaming URL based on the third party information. Furthermore, the distributing unit 140 may transfer the recorded file and the e-mail address of the e-mail receiver address to the streaming server 210, and the streaming server 210 may request to the e-mail server 230 to transfer the e-mail including the streaming URL based on the e-mail address of the e-mail receiver.

after distributing by the above-described methods, when the user terminal 201 accesses to the streaming URL, the streaming server 210 may transfer a stream of the recorded file and a stream of the sound source data of the MR sound source file. In this way, since the stream of the recorded file and the stream of the MR sound source file are simultaneously reproduced on the user terminal, the recorded file and the MR sound source file do not need to be combined with each other when generating the recorded file. Thus, a processing time can be reduced. Further, it is possible to avoid distortion or clipping due to the combination of the MR sound source file in which its level is maximized in the mastering process and the recorded file including the voice.

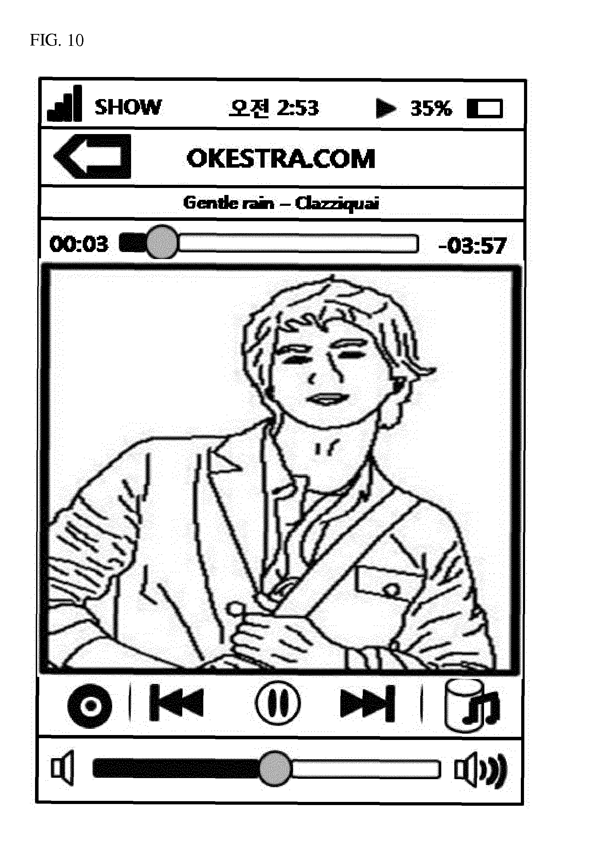

FIG. 10 is a diagram that illustrates a screen showing when the distributed sound source of the recorded file of the present invention is reproduced on the user terminal. Similarly to the example illustrated in FIG. 5, when the user terminal 201 accesses the streaming URL that is distributed by the above-described method, a sound source player receives the song of ID "fluxusmusic" singing along "gentle rain" sung by Clazzyquai from the streaming server 210, and outputs the received song. The stream of the recorded file including the voice of "fluxusmusic" and the stream of the MR sound source file of "gentle rain" are simultaneously output in the user terminal.

It should be understood by those skilled in the art that the present invention may be embodied in other specific forms without departing from the spirit and essential features thereof. Therefore, the above-described embodiments are merely illustrative examples, and the present invention is not limited thereto. It should be understood that the scope of the present invention is defined not by the above detailed description, but by the appended claims, and that the described embodiments and all variations or modifications that can be deduced from equivalents interpreted from the claims fall within the scope of the present invention.

## Claims

1. A method for reproducing and distributing a sound source of an electronic terminal, the method comprising:
(a) a step of starting to simultaneously reproduce a stream of an MR (Music Recorded) sound source file and a stream of an AR (All Recorded) sound source file that a voice is recorded to be added to the MR sound source file by a reproducing unit of the electronic terminal, and outputting one stream of the streams through an output unit; and
(b) a step of controlling the reproducing unit to stop the output of the one stream that is currently being output through the output unit and to output the other stream through the output unit by a reproducing switch unit of the electronic terminal based on a selection of a user while the stream of the MR sound source file and the stream of the AR sound source file are reproduced, respectively.

2. The method for reproducing and distributing the sound source of the electronic terminal according to claim 1, further comprising:
(c) a step of recording a voice of the user and storing the recorded voice as a recorded file by a recording unit of the electronic terminal.

3. The method for reproducing and distributing the sound source of the electronic terminal according to claim 2, wherein the step (c) includes a step of recording the voice of the user and storing the recorded voice as the recorded file by the recording unit of the electronic terminal when the stream of the MR sound source file is output through the output unit, while the voice of the user is not recorded when the stream of the AR sound source file is output through the output unit.

4. The method for reproducing and distributing the sound source of the electronic terminal according to claim 2, wherein the step (b) includes a step of controlling the reproducing unit to output the stream of the MR sound source file through the output unit by the reproducing switch unit when the voice of the user is recorded by the recording unit of the electronic terminal.

5. The method for reproducing and distributing the sound source of the electronic terminal according to claim 2, wherein the step (c) includes a step of recording the voice of the user and storing the recorded voice as the recorded file by the recording unit of the electronic terminal when a level of the voice of the user is equal to or greater than a predetermined level value.

6. The method for reproducing and distributing the sound source of the electronic terminal according to claim 2,
wherein the step (c) includes:
(c-1) a step of recording the voice of the user by the recording unit of the electronic terminal,
(c-2) a step of determining by the recording unit of the electronic terminal whether or not the recorded voice is an effective voice by comparing an average value and a variance value of the recorded voice with respect to a recording time with a predetermined level value, respectively, and
(c-3) a step of storing the recorded voice as the recorded file by the recording unit of the electronic terminal, when it is determined that the recorded voice is the effective voice.

7. The method for reproducing and distributing the sound source of the electronic terminal according to claim 2, wherein the step (c) further includes (c-4) a step of compressing and storing the recorded file by the recording unit of the electronic terminal.

8. The method for reproducing and distributing the sound source of the electronic terminal according to claim 2, further comprising:
(d) a step of transferring the recorded file to a streaming server by a distributing unit of the electronic terminal.

9. The method for reproducing and distributing the sound source of the electronic terminal according to claim 8, further comprising:
(e) a step of storing the recorded file received from the distributing unit of the electronic terminal by the streaming server, and
(f) a step of transferring a stream of voice data of the recorded file from the streaming server to a user terminal that accesses thereto using a streaming URL of the recorded file.

10. The method for reproducing and distributing the sound source of the electronic terminal according to claim 9,
wherein the step (d) includes a step of transferring the recorded file and the MR sound source file reproduced from the distributing unit of the electronic terminal to the streaming server when the recorded file is generated,
the step (e) includes a step of storing the recorded file and the MR sound source file received by the streaming server from the distributing unit of the electronic terminal, and
the step (f) includes a step of transferring the stream of the voice data of the recorded file and a stream of audio data of the MR sound source file from the streaming server to the user terminal that accesses thereto using the streaming URL of the recorded file.

11. The method for reproducing and distributing the sound source of the electronic terminal according to claim 9,
wherein the step (d) includes a step of transferring the recorded file and an identifier of the MR sound source file reproduced when the recorded file is generated to the streaming server from the distributing unit of the electronic terminal,
the step (e) includes a step of storing the recorded file and the identifier of the MR sound source received by the streaming server from the distributing unit of the electronic terminal, and
the step (f) includes a step of extracting the voice data of the recorded file and the MR sound source file corresponding to the identifier of the MR sound source file from an MR sound source database and transferring a stream of audio data of the extracted recorded file from the streaming server to the user terminal that accesses thereto using the streaming URL of the recorded file.

12. The method for reproducing and distributing the sound source of the electronic terminal according to claim 9,
wherein the step (d) further includes:
(d-1) a step of receiving the streaming URL of the recorded file by the distributing unit of the electronic terminal from the streaming server, and
(d-2) a step of transferring content including the streaming URL to a third party server from the distributing unit of the electronic terminal to be posted.

13. The method for reproducing and distributing the sound source of the electronic terminal according to claim 9,
wherein the step (d) further includes:
(d-1) a step of receiving the streaming URL of the recorded file by the distributing unit of the electronic terminal from the streaming server, and
(d-3) a step of transferring content including the streaming URL and an e-mail address of an e-mail receiver to an e-mail server from the distributing unit of the electronic terminal to be transferred by e-mail.

14. The method for reproducing and distributing the sound source of the electronic terminal according to claim 9,
wherein the step (d) further includes:
(d-1) a step of receiving the streaming URL of the recorded file by the distributing unit of the electronic terminal from the streaming server, and
(d-4) a step of transferring content including the streaming URL and an identifier of a message receiver to a messenger server from the distributing unit of the electronic terminal to be transferred by a messenger.

15. The method for reproducing and distributing the sound source of the electronic terminal according to claim 9,
wherein the step (d) includes a step of transferring the recorded file and third party server information from the distributing unit of the electronic terminal to the streaming server, and
the step (e) further includes (e-1) a step of transferring content including the streaming URL to a third party server corresponding to the third party server information received by the streaming server from the distributing unit of the electronic terminal to be posted.

16. The method for reproducing and distributing the sound source of the electronic terminal according to claim 9,
wherein the step (d) includes a step of transferring the recorded file and the e-mail address of the e-mail receiver to the streaming server from the distributing unit of the electronic terminal, and
the step (e) further includes (e-2) a step of transferring the content including the streaming URL and an e-mail address of an e-mail receiver received by the streaming server from the distributing unit of the electronic terminal to an e-mail server to be transferred by e-mail.

17. The method for reproducing and distributing the sound source of the electronic terminal according to claim 2, wherein the step (c) includes a step of controlling the reproducing unit to stop the output of the stream of the AR sound source file or the output of the stream of the MR sound source file when it is determined by the recording unit of the electronic terminal that an effective voice equal to or greater than a predetermined level value is not input for a preset period of time.

18. The method for reproducing and distributing the sound source of the electronic terminal according to claim 2,
wherein the step (c) includes:
(c-1) a step of recording the voice of the user by the recording unit of the electronic terminal,
(c-5) a step of determining by the recording unit of the electronic terminal whether or not the voice that is being recorded is an effective voice by respectively comparing a predetermined level value with an average value and a variance value of the voice that is being recorded with respect to a preset recording time right before comparing, and
(c-6) a step of controlling the reproducing unit to stop the output of the stream of the AR sound source file or the output of the stream of the MR sound source file when it is determined by the recording unit of the electronic terminal that the voice that is being recorded is not the effective voice.

19. A system for reproducing and distributing a sound source of an electronic terminal, the system comprising:
an input unit that receives input from a user;
an output unit that outputs the sound source;
a reproducing unit that starts to simultaneously reproduce a stream of an MR (Music Recorded) sound source file and a stream of an AR (All recorded) sound source file that is recorded to be added to the MR sound source file, and outputs one stream of the streams; and
a reproducing switch unit that controls the reproducing unit to stop the output of the one stream that is currently being output and to output the other stream through the output unit based on a selection of the user while the stream of the MR sound source file and the stream of the AR sound source file are simultaneously reproduced.

20. The system for reproducing and distributing the sound source of the electronic terminal according to claim 19, further comprising:
a microphone that receives a voice of the user; and
a recording unit that records the voice of the user received through the microphone and stores the recorded voice as a recorded file while the stream of the MR sound source file is output through the output unit.

21. The system for reproducing and distributing the sound source of the electronic terminal according to claim 20, wherein the reproducing switch unit controls the reproducing unit to output the stream of the MR sound source file through the output unit when the recording unit records the voice of the user received through the microphone.

22. The system for reproducing and distributing the sound source of the electronic terminal according to claim 20, wherein the recording unit records the voice of the user and stores the recorded voice as the recorded file when a level of the voice of the user received through the microphone is equal to or greater than a predetermined level value.

23. The system for reproducing and distributing the sound source of the electronic terminal according to claim 20, wherein the recording unit records the voice of the user received through the microphone, determines whether or not the recorded voice is an effective voice by comparing an average value and a variance value of the recorded voice with respect to a recording time with a predetermined level value, respectively, and stores the recorded voice as the recorded file when it is determined that the recorded voice is the effective voice.

24. The system for reproducing and distributing the sound source of the electronic terminal according to claim 20, wherein the recording unit compresses and stores the recorded file.

25. The system for reproducing and distributing the sound source of the electronic terminal according to claim 20, further comprising:
a distributing unit that transfers the recorded file to a streaming server.

26. The system for reproducing and distributing the sound source of the electronic terminal according to claim 25, wherein the distributing unit transfers the recorded file and the MR sound source file reproduced when the recorded file is generated or an identifier of the MR sound source file to the streaming server.

27. The system for reproducing and distributing the sound source of the electronic terminal according to claim 25, wherein the distributing unit transfers the recorded file to the streaming server, receives a streaming URL of the recorded file from the streaming server, and transfers content including the streaming URL to a third party server to be posted.

28. The system for reproducing and distributing the sound source of the electronic terminal according to claim 25, wherein the distributing unit transfers the recorded file to the streaming server, receives a streaming URL of the recorded file from the streaming server, and transfers content including the streaming URL and an e-mail address of an e-mail receiver input by the user through the input unit to an e-mail server to be transferred by e-mail.

29. The system for reproducing and distributing the sound source of the electronic terminal according to claim 25, wherein the distributing unit transfers the recorded file to the streaming server, receives a streaming URL of the recorded file from the streaming server, and transfers content including the streaming URL and an identifier of a message receiver input by the user through the input unit to a messenger server to be transferred by a messenger.

30. The system for reproducing and distributing the sound source of the electronic terminal according to claim 20, wherein the recording unit controls the reproducing unit to stop the output of the stream of the AR sound source file or the output of the stream of the MR sound source file when an effective voice that is equal to or greater than a predetermined level value is not received through the microphone for a preset period of time.

31. The system for reproducing and distributing the sound source of the electronic terminal according to claim 20, wherein the recording unit records the voice of the user received through the microphone, determines whether or not the voice that is being recorded is an effective voice by respectively comparing a predetermined level value with an average value and a variance value of the voice that being recorded with respect to a recording time for a preset period of time right before comparing, and stores the recorded voice as the recorded file when it is determined that the voice being recorded is the effective voice.
